# EUROPÄISCHE PATENTSCHRIFT

(11) **EP 0 805 075 B1**
(45) Veröffentlichungstag und Bekanntmachung des Hinweises auf die Patenterteilung: **19.03.2003**
(21) Anmeldenummer: 97106802.8
(22) Anmeldetag: 24.04.1997
(51) Int. Cl.: B60R 22/20

(54) **Verstellvorrichtung für einen Umlenkbeschlag**
Safety belt return anchor adjustment device
Dispositif de réglage d'un renvoi de ceinture

(30) Priorität: 03.05.1996 DE 29608035 U
(43) Veröffentlichungstag der Anmeldung: 05.11.1997
(73) Patentinhaber: TRW Occupant Restraint Systems GmbH & Co. KG, 73551 Alfdorf (DE)
(72) Erfinder: Müller, Albrecht, 73568 Durlangen (DE); Holzapfel, Volker, 66606 St. Wendel (DE)
(74) Vertreter: Degwert, Hartmut, Dipl.-Phys.

(56) Entgegenhaltungen:
- DE-A- 2 655 015
- DE-A- 3 514 980
- DE-A- 3 713 137
- DE-A- 3 742 390
- DE-A- 3 802 323

## Beschreibung

Die Erfindung betrifft eine Verstellvorrichtung für einen Umlenkbeschlag eines Fahrzeug-Sicherheitsgurtsystems nach dem Oberbegriff des Anspruchs 1.

Eine derartige Verstellvorrichtung ist in der gattungsgemäßen DE 37 13 137 A1 gezeigt. Hier ist ein mit dem Umlenkbeschlag verbundener Schlitten in einer fahrzeugfesten Schiene geführt. Die Schiene weist in einem Seitenteil Rastöffnungen auf, in die ein Rastvorsprung einer im Schlitten gehalterten Rastplatte bei einer seitlichen Verschwenkung eingreifen kann. Im Normalfall wird die Rastplatte durch eine in Verschwenkrichtung angeordnete Feder zurückgehalten. Erst wenn bei einer abrupten Belastung des Sicherheitsgurts durch einen Fahrzeuginsassen oder durch die Aktivierung eines Gurtstraffers eine erhöhte Kraft auf den Schlitten ausgeübt wird, verschwenkt die Rastplatte gegen die Federkraft um einen exzentrisch am Schlitten angeordneten Stift. Diese Anordnung bewirkt, daß auch eine Kraft mit einer geringen Horizontalkomponente, wie sie z.B. auftritt, wenn ein Gurtstraffer den Gurt einzieht, eine Verschwenkung der Rastplatte zufolge hat. Der Eingriff des Rastvorsprungs erfolgt ausschließlich durch eine Verschwenkung in Richtung der Seitenwand der Schiene.

Mit einer solchen Verstellvorrichtung kann der Verlauf des Sicherheitsgurtes optimal an die Größe des jeweiligen Fahrzeuginsassen angepaßt werden, wobei diese Anpassung über die Längsverstellung des Fahrzeugsitzes erfolgt. Problematisch ist bei einer solchen Verstellvorrichtung, daß zum einen jederzeit eine leichtgängige Verstellung des Schlittens bei der Längsverstellung des Fahrzeugsitzes gewährleistet sein soll und zum anderen der Schlitten in jeder Stellung sicher an der Schiene blockiert sein muß, wenn über den Sicherheitsgurt eine relativ zum Fahrzeug nach unten gerichtete Kraft auf den Umlenkbeschlag einwirkt, wie sie bei einem Unfall auftritt. Dieses Problem wird noch verschärft, wenn das Sicherheitsgurtsystem mit einem Gurtstraffer versehen ist, der bei einem Unfall die Gurtlose aus dem Sicherheitsgurtsystem herauszieht. Die dabei auf den Umlenkbeschlag einwirkenden Kräfte können dazu führen, daß das Rastteil nicht sicher in die nächste Rastöffnung eingreift und daher der Schlitten relativ zum Fahrzeug nach unten verlagert wird, wodurch die Wirkung des Gurtstraffers beeinträchtigt wird.

Durch die Erfindung wird eine Verstellvorrichtung erhalten, die zum einen im Normalbetrieb ein leichtgängiges Verstellen des Schlittens relativ zur Schiene bei einem Verschieben des Fahrzeugsitzes ermöglicht und zum anderen im Notfall eine schnelle und zuverlässige Blokkierung des Schlittens an der Schiene gewährleistet.

Zu diesem Zweck ist gemäß der Erfindung eine Verstellvorrichtung mit den Merkmalen des Anspruchs 1 vorgesehen. Das Rastteil wird durch die im Notfall ohnehin im Sicherheitsgurtsystem wirkenden und auch auf das Montageteil übertragenen Kräfte in die Rastöffnungen eingesteuert. Auf diese Weise wird eine besonders sichere und schnelle Sperrung des Schlittens erzielt, die auch die Verwendung eines Gurtstraffers im Sicherheitsgurtsystem ermöglicht. Das Rastteil rastet nur im Notfall in eine der Rastöffnungen ein. Daher ist der Schlitten im Normalfall jederzeit leichtgängig in der Schiene zu verstellen.

Gemäß einer ersten Ausführungsform der Erfindung ist vorgesehen, daß das Rastteil als mit einer Rastkante versehene Rastplatte ausgeführt ist, die verschiebbar am Schlitten gelagert und elastisch in ihre Ruhestellung beaufschlagt ist, und daß am Schlitten eine Leitfläche angeordnet ist, auf die die Rastplatte bei Krafteinwirkung auf das Montageteil relativ zum Fahrzeug nach unten aufläuft und von der sie in Richtung des Teils der Schiene geführt wird, in dem die Rastöffnungen angeordnet sind. Durch die Umsetzung der im Notfall auf den Umlenkbeschlag einwirkenden Kraft mittels der Leitfläche wird eine besonders hohe Kraft für eine Zwangseinsteuerung der Rastkante in die Rastöffnungen erzielt.

Gemäß einer zweiten Ausführungsform ist vorgesehen, daß die Rastplatte sowohl relativ zum Schlitten verschiebbar als auch um eine Kippkante relativ zum Schlitten verschwenkbar ist. Dies kombiniert ein besonders schnelles Ansprechen der Rastplatte auf die im Sicherheitsgurtsystem wirkenden Kräfte mit einer besonders hohen Kraft zum Zwangseinsteuern der Rastplatte in die Rastöffnungen.

Vorteilhafte Ausgestaltungen der Erfindung sind in den Unteransprüchen angegeben.

Die Erfindung wird nachfolgend unter Bezugnahme auf verschiedene Ausführungsformen beschrieben, die in der Zeichnung dargestellt sind. In dieser zeigen:
- Figur 1 einen schematischen Querschnitt durch eine Verstellvorrichtung gemäß einer ersten Ausführungsform der Erfindung;
- Figur 2 eine schematische, teilgeschnittene Draufsicht auf die Verstellvorrichtung von Figur 1;
- Figur 3 einen schematischen Querschnitt durch eine weitere Verstellvorrichtung die heine Ausführungs-auf der Erfindung ist;
- Figur 4 eine perspektivische Ansicht mit Teilausbrüchen einer Verstellvorrichtung gemäß einer zweiten Ausführungsform der Erfindung; und
- Figur 5 eine weitere perspektivische Ansicht der Verstellvorrichtung von Figur 4.

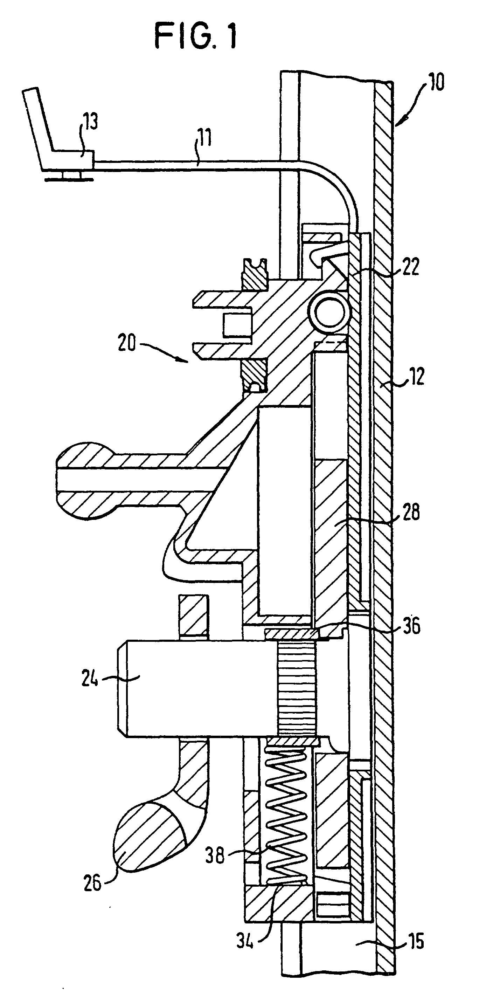

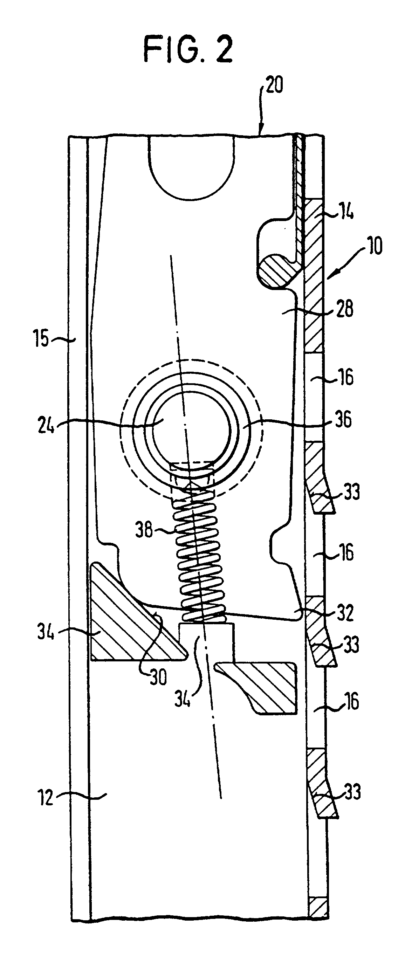

In den Figuren 1 und 2 ist eine Verstellvorrichtung gemäß einer ersten Ausführungsform der Erfindung dargestellt. Die Verstellvorrichtung weist eine fahrzeugfest angebrachte Schiene 10 auf, die ein Bodenteil 12 und zwei Seitenteile 14, 15 enthält. In dem Seitenteil 14 sind Rastöffnungen 16 angeordnet. In der Schiene 10 ist verschiebbar ein Schlitten 20 angeordnet, der im wesentlichen aus einem Gleitstück 22, einem als Befestigungsbolzen 24 ausgestalteten Montageteil für einen Umlenkbeschlag 26 und einer Rastplatte 28 besteht. Der Schlitten 20 ist mittels eines Bowdenzugs 11 mit einem Fahrzeugsitz 13 gekoppelt. Die Rastplatte 28 ist relativ zum Gleitstück 22 verschiebbar angeordnet, und am Gleitstück 22 ist eine Leitfläche 30 vorgesehen, die mit der Rastplatte 28 zusammenwirken kann. Die Rastplatte ist an ihrem relativ zum Fahrzeug gesehen unteren Ende auf der den Rastöffnungen 16 gegenüberliegenden Seite mit einer Rastkante 32 versehen. Zwischen einem Widerlager 34 am Gleitstück 22 und einer auf den Befestigungsbolzen 24 aufgeschobenen Hülse 36 ist eine Druckfeder 38 angeordnet. Die Wirkungsrichtung der Druckfeder 38 ist in einer solchen Weise schräg zur Längsachse der Schiene ausgerichtet, daß die Rastplatte 28 relativ zum Fahrzeug nach oben in ihre Ruhestellung beaufschlagt ist, in der die Rastkante 32 der Rastplatte 28 von den Rastöffnungen 16 beabstandet ist. Diese Stellung ist in den Figuren 1 und 2 dargestellt.

Durch Krafteinwirkung auf den Umlenkbeschlag 26 relativ zum Fahrzeug nach unten mit einer Kraft, die größer als die Kraft der Druckfeder 38 ist, kann die Rastplatte 28 relativ zum Gleitstück 22 nach unten verschoben werden, wobei sie auf die Leitfläche 30 aufläuft. Diese Leitfläche führt die Rastplatte 28 in Richtung des Seitenteils 14, so daß die Rastkante 32 in die ihr gegenüberliegende Rastöffnung 16 eingreift und den Schlitten 20 an der Schiene 10 blockiert. Die Rastöffnungen 16 sind mit Abschrägungen 33 versehen, daß selbst in dem Fall, daß die Rastkante 32 beim Überführen der Rastplatte 28 in die Sperrstellung auf einen zwischen zwei benachbarten Rastöffnungen 16 liegenden Steg der Schiene 10 trifft, sie bei der nachfolgenden Bewegung des Schlittens 20 nach unten sicher in die nächste Rastöffnung 16 eingreift.

Die Gegenkraft zu der Kraft, die zum Überführen der Rastplatte 28 aus der Ruhestellung in die Sperrstellung notwendig ist, wird mittels der Koppelung des Schlittens 20 mit dem Fahrzeugsitz bereitgestellt. Wenn das Sicherheitsgurtsystem mit einem Gurtstraffer versehen ist, läuft der Vorgang des Blockierens des Schlittens 20 in der Schiene so schnell ab, daß ein Teil der Gegenkraft durch die Massenträgheit des Schlittens 20 bereitgestellt wird.

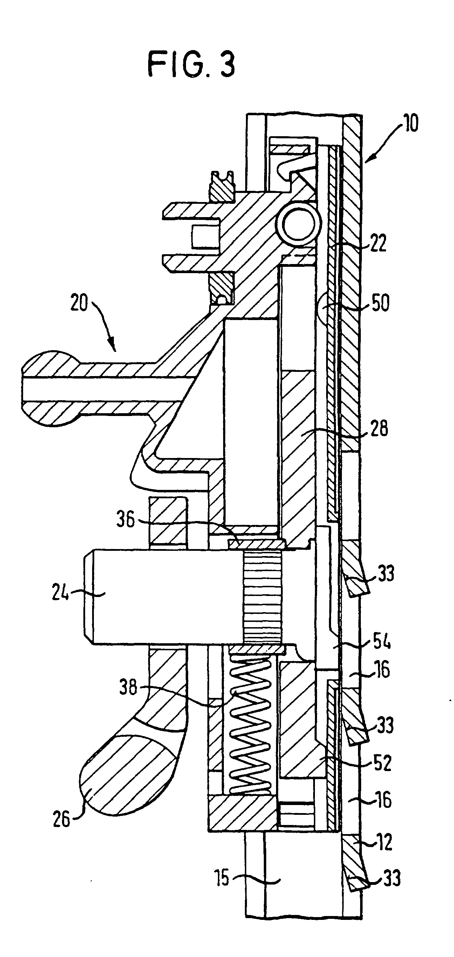

In Figur 3 ist eine Verstellvorrichtung gemäß einem weiteren Prinzip dargestellt, die zur Veranschaulichung der Erfindung beitragen soll. Elemente bei dieser Verstellvorrichtung, die von der ersten Ausführungsform der Erfindung bekannt sind, tragen dieselben Bezugszeichen wie in den Figuren 1 und 2, und hinsichtlich ihrer Funktion wird auf die Erläuterungen zu diesen Figuren Bezug genommen.

Bei der in Figur 3 gezeigten Verstellvorrichtung ist die Rastplatte 28 so an dem Gleitstück 22 angeordnet, daß sie eine Schwenkbewegung um einen Vorsprung 50 ausführen kann, der an dem Gleitstück 22 ausgebildet ist. Durch das Zusammenwirken von Rastplatte 28 und Vorsprung 50 ist eine Kippkante definiert, die senkrecht zu den Seitenteilen 14, 15 der Schiene ausgerichtet ist. Hier sind die Rastöffnungen 16 im Bodenteil 12 der Schiene angeordnet, und die Rastplatte 28 ist an ihrem unteren Ende auf der dem Bodenteil 12 zugewandten Seite mit einem Rastvorsprung 52 versehen. Außerdem ist das dem Bodenteil 12 gegenüberliegende Ende des Befestigungsbolzens 24 mit einer Rastnase 54 versehen. Die Druckfeder 38 ist so angeordnet, daß sie ein die Rastplatte 28 und den Befestigungsbolzen 24 in die in Figur 3 dargestellte Ruhestellung beaufschlagendes Moment um die Kippkante erzeugt.

Wenn auf den Umlenkbeschlag 26 eine relativ zum Fahrzeug nach unten gerichtete Kraft ausgeübt wird, führt die Rastplatte 28 zusammen mit dem Befestigungsbolzen 24 eine Schwenkbewegung um die Kippkante aus, die bezüglich der Darstellung von Figur 3 entgegen dem Uhrzeigersinn verläuft. Durch diese Schwenkbewegung werden die Rastplatte 28 und der Befestigungsbolzen 24 aus ihrer Ruhestellung in die Sperrstellung bewegt, in der der Rastvorsprung 52 und die Rastnase 54 in die Rastöffnungen 16 eingreifen können. Der Abstand des Rastvorsprungs 52 von der Rastnase 54 ist dabei relativ zur Teilung der Rastöffnungen 16 so gewählt, daß in jeder Stellung des Schlittens 20 relativ zur Schiene 10 entweder der Rastvorsprung 52 oder die Rastnase 54 direkt in eine Rastöffnung 16 eingreifen kann. Der Schlitten 20 wird somit in jeder Stellung relativ zur Schiene innerhalb eines sehr kurzen Weges blockiert, so daß die Straffwirkung eines möglicherweise verwendeten Gurtstraffers nicht beeinträchtigt wird.

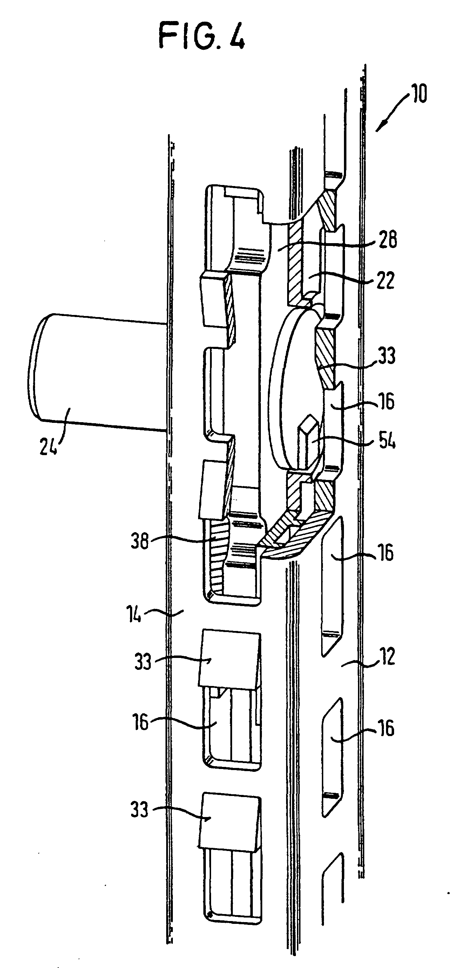

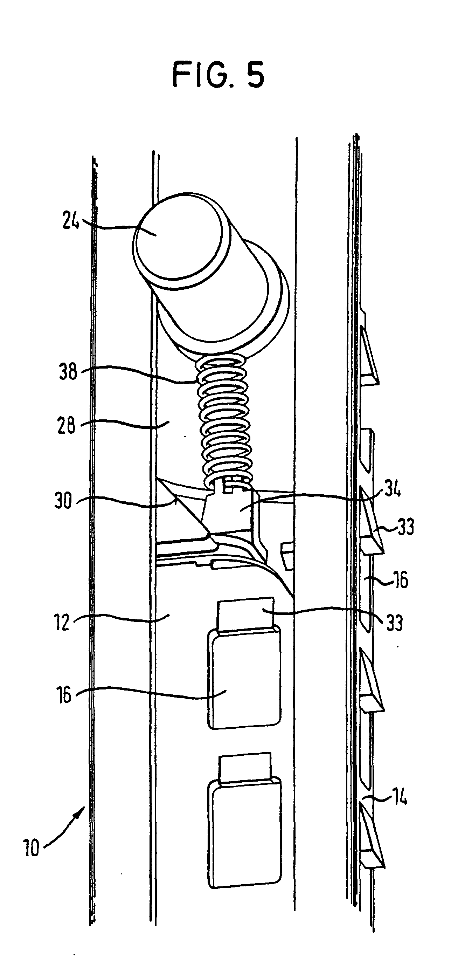

In den Figuren 4 und 5 ist eine Verstellvorrichtung gemäß einer zweiten Ausführungsform der Erfindung dargestellt. Auch bei dieser Ausführungsform sind bekannte Elemente mit den in den Figuren 1 bis 3 verwendeten Bezugszeichen versehen, und für die Beschreibung ihrer Funktion wird auf die Erläuterungen zu diesen Figuren verwiesen.

Die Verstellvorrichtung gemäß der zweiten Ausführungsform kombiniert die Sperrprinzipien der ersten Ausführungsform und der in Figur 3 gezeigten Verstellvorrichtung. Die Schiene 10 ist sowohl am Seitenteil 14 als auch am Bodenteil 12 mit Rastöffnungen 16 versehen, und die Rastplatte 28 ist sowohl mit einer Rastkante 32 als auch mit einem Rastvorsprung 52 versehen. Ferner ist der Befestigungsbolzen 24 mit einer Rastnase 54 versehen. Die Druckfeder 38 beaufschlagt die Rastplatte 28 relativ zum Schlitten 20 nach oben in die Ruhestellung, in der die Rastkante 32 von den Rastöffnungen 16 im Seitenteil 14 der Schiene beabstandet ist, wobei die Druckfeder 38 ferner ein Moment um die Kippkante erzeugt, welches den Rastvorsprung 52 und die Rastnase 54 von den im Bodenteil 12 angeordneten Rastöffnungen 16 beabstandet hält.

Wenn ausgehend von der in den Figuren 4 und 5 dargestellten Ruhestellung auf den Umlenkbeschlag 26 eine relativ zum Fahrzeug nach unten gerichtete Kraft ausgeübt wird, führt die Rastplatte 28 zusammen mit dem Befestigungsbolzen 24 eine kombinierte Schiebe- und Schwenkbewegung in die Sperrstellung aus. Dabei wird zum einen durch Auflaufen der Rastplatte 28 auf die Leitfläche 30 die Rastkante 32 in Richtung der in dem Seitenteil 14 angeordneten Rastöffnungen 16 geführt, und zum anderen werden der Rastvorsprung 52 und die Rastnase 54 durch eine Schwenkbewegung der Rastplatte 28 um die Kippkante in Richtung der im Bodenteil 12 angeordneten Rastöffnungen 16 bewegt. Die Rastkante 32, der Rastvorsprung 52 und die Rastnase 54 weisen einen sich von der Teilung der Rastöffnungen 16 derart unterscheidenden Abstand voneinander auf, daß in jeder Stellung des Schlittens 20 relativ zur Schiene 10 immer eines dieser Rastelemente 32, 52, 54 unmittelbar in eine der Rastöffnungen 16 eingreifen kann, wenn die Rastplatte 28 aus der Ruhestellung in die Sperrstellung überführt wird. Auf diese Weise ist der Leerweg minimiert, den der Schlitten 20 nach dem Überführen der Rastplatte 28 in die Sperrstellung relativ zur Schiene 10 maximal ausführen kann, bis er zuverlässig blockiert ist.

Alle Ausführungsformen der Erfindung bieten den Vorteil, daß der Schlitten 20 im Normalbetrieb frei in der Schiene 10 bewegbar ist, so daß eine Verstellung des Fahrzeugsitzes 13 und damit ein Anpassen des Umlenkbeschlages 26 an die Größe des jeweiligen Fahrzeuginsassen in besonders einfacher und komfortabler Weise möglich ist. Wenn dagegen ein Blockieren des Schlittens 20 an der Schiene notwendig ist, geschieht dies in zuverlässiger Weise mit kurzer Ansprechzeit und geringem Leerweg, da das Überführen der Rastplatte 28 aus der Ruhestellung in die Sperrstellung direkt mittels des Befestigungsbolzens 24 erfolgt, an dem der Umlenkbeschlag 26 für den Sicherheitsgurt angebracht ist. Bei der zweitenAusführungsform ist gewährleistet, daß in jeder Stellung des Schlittens 20 mindestens eines der ein Blockieren des Schlittens 20 bewirkenden Rastelemente sicher in eine der Rastöffnungen 16 eingreift. Bei der zweiten Ausführungsform ist durch die Verwendung von drei geeignet voneinander beabstandeten Rastelementen auch gewährleistet, daß die Blockierung des Schlittens 20 an der Schiene 10 nach einem extrem kurzen Leerweg erfolgt.

## Patentansprüche

1. Verstellvorrichtung für einen Umlenkbeschlag (26) eines Fahrzeug-Sicherheitsgurtsystems,
mit einer fahrzeugfesten, mit Rastöffnungen (16) versehenen Schiene (10), die ein Bodenteil (12) und zwei Seitenteile (14, 15) aufweist, und einem in der Schiene (10) verschiebbaren Schlitten (20), der mit einem Fahrzeugsitz (13) gekoppelt und mit einem Montageteil (24) für den Umlenkbeschlag (26) und mindestens einem Rastteil (28) versehen ist, das mit den Rastöffnungen (16) zusammenwirken kann, um den Schlitten (20) gegen eine Verlagerung relativ zum Fahrzeug nach unten in der Schiene (10) zu blockieren,
wobei durch Krafteinwirkung auf das Montageteil (24) relativ zum Fahrzeug nach unten das Rastteil (28) aus einer normalen Ruhestellung, in der es nicht in eine Rastöffnung (16) eingreift, in eine Sperrstellung überführbar ist, in der es in mindestens eine der Rastöffnungen (16) eingreift und
wobei das Rastteil als mit einer Rastkante (32) versehenen Rastplatte (28) ausgerührt ist, die elastisch in ihre Ruhestellung beaufschlagt ist,
**dadurch gekennzeichnet, daß** die Rastplatte (28) verschiebbar am Schlitten (20) gelagert ist und daß am Schlitten eine Leitfläche (30) angeordnet ist, auf die die Rastplatte (28) bei Krafteinwirkung auf das Montageteil relativ zum Fahrzeug nach unten aufläuft und von der sie in Richtung des Teils der Schiene geführt wird, in dem die Rastöffnungen (16) angeordnet sind.

2. Verstellvorrichtung nach Anspruch 1, **dadurch gekennzeichnet, daß** die Rastplatte (28) von einer Feder (38) in ihre Ruhestellung beaufschlagt ist, deren eines Ende am Schlitten (20) und deren anderes Ende an dem Montageteil (24) abgestützt ist und deren Wirkungsrichtung in einer solchen Weise schräg zur Längsachse der Schiene (20) verläuft, daß die Rastkante (32) von den Rastöffhungen (16) weg beaufschlagt ist.

3. Verstellvorrichtung nach einem der vorhergehenden Ansprüche, **dadurch gekennzeichnet, daß** die Rastplatte (28) sich parallel zum Bodenteil (12) der Schien (10) erstreckt und die Rastöffnungen (16) in einem Seitenteil (14) der Schiene angeordnet sind.

4. Verstellvorrichtung nach Anspruch 3, **dadurch gekennzeichnet, daß** auch das Bodenteil (12) mit Rastöffnungen (16) versehen ist, daß an dem Schlitten ein Vorsprung (50) angeordnet ist, an dem die Rastplatte (28) anliegt, so daß eine sich senkrecht zu den Seitenteilen (14, 15) erstreckende Kippkante für die Rastplatte gebildet ist, daß die Rastplatte (28) mit einem Rastvorsprung (52) versehen ist, daß das Montageteil ein Befestigungsbolzen (24) ist, dessen dem Bodenteil (12) der Schiene (10) zugewandtes axiales Ende mit einer Rastnase (54) versehen ist und der an der Rastplatte (28) festgelegt ist, und daß die Rastplatte (28) zusammen mit dem Befestigungsbolzen (24) durch eine kombinierte Schiebe- und Schwenkbewegung aus der Ruhestellung in die Sperrstellung bewegbar ist.

5. Verstellvorrichtung nach Anspruch 4, **dadurch gekennzeichnet, daß** die Rastkante (32), die Rastnase (54) und der Rastvorsprung (52) einen sich von der Teilung der Rastöffnungen (16) derart unterscheidenden Abstand voneinander haben, daß in jeder Stellung des Schlittens (20) relativ zur Schiene (10) mindestens eines dieser Rastelemente (32, 52, 54) direkt in eine der Rastöffnungen eingreifen kann.

## Claims

1. An adjusting device for a deflector fitting (26) of a vehicle seat belt system,
comprising a vehicle-fixed rail (10) provided with latching openings (16) and having a bottom part (12) and two side parts (14, 15), and a carriage (20) shiftable in said rail (10) and coupled to a vehicle seat (13), said carriage (20) being provided with a fitting part (24) for said deflector fitting (26) and with at least one latching part (28) which is able to cooperate with said latching openings (16) to block said carriage (20) against a downward displacement in said rail (10) relative to the vehicle,
said latching part (28), as a result of a force acting downwards on said fitting part (24) relative to the vehicle, being transferable from a normal resting position, in which it does not engage a latching opening (16), into a locking position in which it engages at least one of said latching openings (16), and
said latching part being configured as a latching plate (28) provided with a latching edge (32) and elastically biased into its resting position,
**characterized in that** said latching plate (28) is shiftably mounted on said carriage (20) and that on said carriage a guide surface (30) is arranged onto which said latching plate (28) runs when said fitting part is subjected to a force acting downwards relative to the vehicle, and from which it is guided towards the part of the rail in which said latching openings (16) are arranged.

2. The adjusting device as set forth in claim 1, **characterized in that** said latching plate (28) is biased into its resting position by a spring (38) the one end of which is supported by said carriage (20) and the other end by said fitting part (24) and the effective direction of which is oriented inclined to the longitudinal axis of said rail (10) such that said latching edge (32) is biased away from said latching openings (16).

3. The adjusting device as set forth in either one of the preceding claims, **characterized in that** said latching plate (28) extends parallel to said bottom part (12) of said rail (10) and said latching openings (16) are arranged in a side part (14) of said rail.

4. The adjusting device as set forth in claim 3, **characterized in that** also said bottom part (12) is provided with latching openings (16), that on said carriage a projection (50) is arranged against which said latching plate (28) abuts, so that a tilt edge extending perpendicularly to said side parts (14, 15) is formed for said latching plate, that said latching plate (28) is provided with a latching projection (52), that said fitting part is a fastener stud (24) the axial end of which facing said bottom part (12) of said rail (10) is provided with a latching nose (54) and which is fixed to said latching plate (28), and that said latching plate (28) together with said fastener stud (24) is movable from said resting position into said locking position by a combined pushing and swivelling movement.

5. The adjusting device as set forth in claim 4, **characterized in that** the distance between each of said latching edge (32), said latching nose (54) and said latching projection (52) differs from the spacing of said latching openings (16) such that in every position of said carriage (20) relative to said rail (10) at least one of said latching elements (32, 52, 54) is able to engage directly in one of said latching openings.

## Revendications

1. Dispositif de réglage pour une ferrure de renvoi (26) d'un système de ceinture de sécurité de véhicule,
comportant un rail (10) solidaire du véhicule et pourvu d'ouvertures d'enclenchement (16), qui présente une partie de fond (12) et deux parties latérales (14, 15) et comportant un chariot (20) qui peut coulisser dans le rail (10) et est accouplé à un siège de véhicule (13) et muni d'une pièce de montage (24) pour la ferrure de renvoi (26) et d'au moins une pièce d'enclenchement (28) qui peut coopérer avec les ouvertures d'enclenchement (16) pour bloquer le chariot (20) à l'encontre d'un déplacement vers le bas dans le rail (10) par rapport au véhicule,
la pièce d'enclenchement (28) pouvant être amenée par une force exercée vers le bas sur la pièce de montage (24) par rapport au véhicule, depuis une position normale de repos dans laquelle elle ne s'engage pas dans une ouverture d'enclenchement (16) jusque dans une position de blocage dans laquelle elle s'engage dans au moins une ouverture d'enclenchement (16), et
la pièce d'enclenchement étant réalisée sous forme de plaque d'enclenchement (28) pourvue d'une arête d'enclenchement (32) et qui est sollicitée élastiquement en position de repos,
**caractérisé en ce que** la plaque d'enclenchement (28) est montée coulissante sur le chariot (20) et **en ce que** sur le chariot est agencée une surface déflectrice (30) sur laquelle la plaque d'enclenchement (28) monte lorsqu'une force est exercée vers le bas sur la pièce de montage par rapport au véhicule et par laquelle elle est guidée en direction de la partie du rail dans laquelle sont ménagées les ouvertures d'enclenchement (16).

2. Dispositif de réglage selon la revendication 1, **caractérisé en ce que** la plaque d'enclenchement (28) est sollicitée dans sa position de repos par un ressort (38) dont l'une des extrémités prend appui sur le chariot (20) et dont l'autre extrémité prend appui sur la pièce de montage (24) et dont le sens d'action est oblique par rapport à l'axe longitudinal du rail (20), de façon à éloigner l'arête d'enclenchement (32) des ouvertures d'enclenchement (16).

3. Dispositif de réglage selon l'une des revendications précédentes, **caractérisé en ce que** la plaque d'enclenchement (28) s'étend parallèlement à la partie de fond (12) du rail (10) et les ouvertures d'enclenchement (16) sont pratiquées dans une partie latérale (14) du rail.

4. Dispositif de réglage selon la revendication 3, **caractérisé en ce que** la partie de fond (12) est elle aussi pourvue d'ouvertures d'enclenchement (16), **en ce que** sur le chariot est ménagée une saillie (50) sur laquelle la plaque d'enclenchement (28) prend appui, ce qui crée pour la plaque d'enclenchement une arête de basculement s'étendant perpendiculairement aux parties latérales (14, 15), **en ce que** la plaque d'enclenchement (28) est pourvue d'une saillie d'enclenchement (52), **en ce que** la pièce de montage est un goujon de fixation (24) dont l'extrémité axiale tournée vers la partie de fond (12) du rail (10) est pourvue d'un ergot d'enclenchement (54) et qui est fixé à la plaque d'enclenchement (28), et **en ce que** la plaque d'enclenchement (28) peut passer, conjointement avec le goujon de fixation (24) de la position de repos à la position de blocage par un mouvement combiné de coulissement et de pivotement.

5. Dispositif de réglage selon la revendication 4, **caractérisé en ce que** l'arête d'enclenchement (32), l'ergot d'enclenchement (54) et la saillie d'enclenchement (52) ont un écartement mutuel différent de l'espacement des ouvertures d'enclenchement (16) de façon que, dans chaque position du chariot (20) par rapport au rail (10), au moins l'un de ces éléments d'enclenchement (32, 52, 54) peut s'engager directement dans l'une des ouvertures d'enclenchement.
